# DEMANDE DE BREVET EUROPEEN

(11) **EP 2 829 973 A1**
(43) Date de publication de la demande: **28.01.2015**
(21) Numéro de dépôt: 14178117.9
(22) Date de dépôt: 23.07.2014
(51) Int. Cl.: G06F 9/50

(54) **Systeme comprenant un ensemble de ressources commun a plusieurs gestionnaires de ressources et de taches**

(30) Priorité: 24.07.2013 FR 1357300
(71) Demandeur: BULL SAS, 78340 Les Clayes sous Bois (FR)
(72) Inventeur: Maupu, Yann, 91290 Arpajon (FR); Cadeau, Thomas, 91300 Massy (FR)
(74) Mandataire: Hirsch & Associés

(57) **Abrégé**

L'invention concerne un système comprenant : au moins deux gestionnaires (1, 2) de ressources et de tâches, indépendants entre eux; un ensemble (3) de ressources (4) commun auxdits gestionnaires (1, 2) ; un logiciel (6) tournant en tâche de fond interfacé auxdits gestionnaires (1, 2) de manière à répartir les ressources (4) dudit ensemble (3) entre lesdits gestionnaires (1, 2) en fonction d'un ou de plusieurs paramètres de répartition.

## Description

### DOMAINE DE L'INVENTION

L'invention concerne un système comprenant un ensemble de ressources commun à plusieurs gestionnaires de ressources et de tâches. L'invention concerne aussi la façon de répartir ces ressources au cours du temps entre les gestionnaires, ainsi que le dispositif de répartition associé. L'invention concerne en particulier un dispositif permettant d'utiliser deux gestionnaires de ressources et de tâches indépendants voire même différents, installés sur un même cluster et travaillant sur un groupe de noeuds de calcul commun.

### CONTEXTE DE L'INVENTION

Un type de dispositif particulier, appelé gestionnaire de ressources et de tâches (Resource and Job Management System ou RJMS en langue anglaise), est chargé de distribuer la puissance de calcul aux applications. Ce gestionnaire joue un rôle central dans la pile d'exécution car il est l'interface entre le domaine utilisateur et le cluster (agglomérat de noeuds de calcul). Un utilisateur demande à ce gestionnaire d'exécuter une tâche en lui soumettant cette tâche. Cette tâche est notamment définie par un temps maximum d'exécution et un nombre de noeuds de calcul nécessaire pour la réaliser. Ces paramètres permettent à ce gestionnaire d'ordonnancer l'ensemble des tâches pour les répartir au mieux. Le principal objectif est d'avoir en permanence un maximum de noeuds utilisés, ce qui optimise l'efficacité globale de l'ensemble du cluster.

Selon un premier art antérieur, il est connu d'utiliser un seul gestionnaire qui est installé pour gérer l'ensemble des noeuds d'un cluster. Ceci implique la connaissance ou l'apprentissage du fonctionnement de ce gestionnaire. De plus, changer de gestionnaire implique une période de transition et un arrêt momentané de la production, c'est-à-dire une rupture dans le flux de traitement des données.

Lors du remplacement d'un gestionnaire par un autre gestionnaire, les noeuds de calcul sont dans un premier temps tous affectés à l'ancien gestionnaire avant la transition, puis dans un deuxième temps tous affectés au nouveau gestionnaire après la transition.

Il est envisagé, conformément à l'invention (cela n'existe pas dans l'art antérieur connu), pour réaliser une transition plus en douceur, de partager, lors d'une transition progressive, sans arrêt momentané de la production, un ensemble de noeuds de calcul entre plusieurs gestionnaires.

Dans ce cas, lors du remplacement d'un gestionnaire par un autre gestionnaire, que celui-ci soit du même type ou de type différent, et plus généralement dans une situation où, à un moment donné, un ensemble de noeuds de calcul est commun à plusieurs gestionnaires, par exemple à deux gestionnaires, se pose un problème, celui de savoir comment l'un des gestionnaires peut connaître la liste des noeuds utilisés par une tâche gérée par l'autre gestionnaire.

Selon un deuxième art antérieur, il est connu d'utiliser un « wrapper » de commande. Un tel wrapper de commandes permet de rendre transparent l'usage d'un gestionnaire, soit en créant des commandes générales dont les paramètres seront adaptés au gestionnaire, soit en simulant des commandes d'un premier gestionnaire, appelant les commandes d'un deuxième gestionnaire.

Ce deuxième art antérieur présente plusieurs inconvénients. D'abord, il ne permet pas d'utiliser plusieurs gestionnaires simultanément. Ensuite, pour essayer un gestionnaire, un wrapper ne suffit pas. En effet, cela requiert une installation et une configuration complètes du nouveau gestionnaire, ce qui perturbe fortement la production. De plus, un wrapper ne prend pas en compte les différences de comportement de chaque gestionnaire en particulier. Enfin, les options des commandes peuvent être très différentes d'un gestionnaire à l'autre. Un wrapper ne peut pas prendre en compte l'ensemble des fonctionnalités de chaque gestionnaire en particulier.

Une solution potentielle pour savoir comment gérer la quantité de noeuds allouée à chaque gestionnaire sans interrompre la production serait d'avoir un gestionnaire de gestionnaires (RJMS de RJMS), c'est-à-dire d'avoir un super gestionnaire (super RJMS). Un tel super gestionnaire n'existe pas dans l'art antérieur et il pourrait présenter une solution potentielle à la problématique de l'invention.

Cependant, selon l'invention, une telle solution présenterait une complexité relativement élevée et nécessiterait un niveau de ressources relativement important pour fonctionner. Par ailleurs, il est probable qu'avec ce double niveau de gestionnaire, les gestionnaires seraient bridés par le super gestionnaire et ne pourraient plus ni donner leur pleine mesure ni apporter leurs avantages habituels.

### RESUME DE L'INVENTION

Le but de la présente invention est de fournir un système et un dispositif de répartition des ressources au cours du temps palliant au moins partiellement les inconvénients précités.

En particulier, l'objet de l'invention est de proposer une solution qui serait moins complexe et qui nécessiterait moins de ressources qu'un super gestionnaire, comme celui envisagé ci-dessus.

Plus particulièrement, l'invention vise à fournir un système et un dispositif de répartition des ressources au cours du temps capables de répartir au cours du temps les ressources entre gestionnaires en fonction d'une ou de plusieurs contraintes, et cela en ne nécessitant l'ajout que d'un dispositif modeste aux besoins limités, et non pas d'un lourd super système de gestion des gestionnaires eux-mêmes.

A cette fin, la présente invention propose un système comprenant : au moins deux gestionnaires de ressources et de tâches, indépendants entre eux; un ensemble de ressources commun auxdits gestionnaires ; un logiciel tournant en tâche de fond interfacé auxdits gestionnaires de manière à répartir les ressources dudit ensemble entre lesdits gestionnaires en fonction d'un ou de plusieurs paramètres de répartition.

Les gestionnaires de ressources et de tâches sont indépendants entre eux, l'un n'est donc pas englobé dans l'autre, une partie de l'un n'est donc pas simultanément une partie de l'autre. Par ailleurs, préférentiellement, aucun lien hiérarchique n'existe entre eux, c'est-à-dire que l'un ne donne pas de commandes à l'autre qui les exécuterait ; typiquement l'un n'est pas l'esclave de l'autre qui serait son maître.

A cette fin, la présente invention propose également un logiciel tournant en tâche de fond, interfacé ou pouvant être interfacé à des gestionnaires de ressources et de tâches, indépendants entre eux, de manière à pouvoir répartir des ressources d'un ensemble de ressources commun auxdits gestionnaires, entre lesdits gestionnaires, en fonction d'un ou de plusieurs paramètres de répartition.

A cette fin, la présente invention propose également un procédé de répartition des ressources entre gestionnaires utilisant un logiciel tournant en tâche de fond ou un procédé tournant en tâche de fond, interfacé ou pouvant être interfacé à des gestionnaires de ressources et de tâches, indépendants entre eux, de manière à pouvoir répartir des ressources d'un ensemble de ressources commun auxdits gestionnaires, entre lesdits gestionnaires, en fonction d'un ou de plusieurs paramètres de répartition.

A cette fin, la présente invention propose également un dispositif de répartition des ressources entre gestionnaires utilisant un logiciel tournant en tâche de fond ou un dispositif tournant en tâche de fond, interfacé ou pouvant être interfacé à des gestionnaires de ressources et de tâches, indépendants entre eux, de manière à pouvoir répartir des ressources d'un ensemble de ressources commun auxdits gestionnaires, entre lesdits gestionnaires, en fonction d'un ou de plusieurs paramètres de répartition.

Toutes les fois que le terme logiciel est utilisé, il pourrait être remplacé par l'expression « programme d'ordinateur ». Le logiciel tournant en tâche de fond produit un effet technique de changement d'affectation des ressources logicielles, comme par exemple des noeuds de calcul, à l'un ou l'autre des gestionnaires, de manière à augmenter le taux d'occupation global de ces ressources logicielles au sein de l'ensemble commun de ressources logicielles partagées par les gestionnaires. Par conséquent, ce logiciel, produisant un effet technique supplémentaire allant au-delà de la simple interaction entre le logiciel et l'ordinateur sur lequel il tourne, présente un caractère technique et n'est pas un « logiciel en tant que tel » (voir la décision de la Grande Chambre de Recours G3/08 de l'Office Européen des Brevets).

L'outil objet de l'invention permet une transition plus en douceur sans arrêt de la production. Cet outil permet également aux administrateurs d'installer et de configurer le nouveau gestionnaire sans arrêter la production et en limitant les risques lors de la transition de l'ancien gestionnaire au nouveau gestionnaire. Par ailleurs, il permet de laisser du temps aux utilisateurs pour se familiariser avec le nouveau gestionnaire et adapter leurs outils.

L'outil objet de l'invention peut présenter selon les configurations, tout ou partie des avantages suivants :
- une gestion dynamique du parc de machines, grâce à la règle mathématique de répartition des machines, le contour des groupes consacrés à chaque gestionnaire évoluant suivant leurs charges respectives ;
- une transition en douceur pour les utilisateurs : les utilisateurs ont le temps d'adapter leurs scripts permettant de lancer les tâches automatiquement ;
- la conservation d'une indépendance des gestionnaires : le lien entre les deux gestionnaires est effectué par l'outil. Ils cohabitent indépendamment l'un de l'autre sans qu'aucune modification du code interne ne soit à effectuer.
- pas d'arrêt de la production : les administrateurs configurent le contour de chaque groupe de machines et la règle d'évolution selon leurs besoins sans avoir à arrêter tout le cluster. Les utilisateurs peuvent ainsi continuer à lancer des tâches sans interruption, même pendant la phase de transition lors du passage d'un gestionnaire à l'autre.

Suivant des modes de réalisation préférés, l'invention comprend une ou plusieurs des caractéristiques suivantes qui peuvent être utilisées séparément ou en combinaison partielle entre elles ou en combinaison totale entre elles, ainsi qu'en combinaison avec les objets précédemment mentionnés, système, logiciel, procédé et dispositif.

De préférence, ledit logiciel tournant en tâche de fond est interfacé auxdits gestionnaires de manière à répartir les ressources dudit ensemble entre lesdits gestionnaires notamment en fonction de leurs charges respectives en tâches. Ainsi, le taux d'utilisation des ressources reste optimisé. En effet, la répartition peut être effectuée de manière à ce qu'un maximum de ressources soit utilisé la plupart du temps.

De préférence, ledit logiciel tournant en tâche de fond est interfacé auxdits gestionnaires de manière à répartir les ressources dudit ensemble entre lesdits gestionnaires notamment en fonction de leurs charges respectives en tâches occupant les ressources dudit ensemble à un instant donné, sans considération de leur durée d'occupation restante et sans considération de leurs charges respectives en tâches futures. Ainsi, le logiciel tournant en tâche de fond peut être drastiquement moins complexe que ne l'aurait être un super gestionnaire de ressources et de tâches situé au-dessus des gestionnaires de ressources et de tâches, puisque seule la charge présente à un moment donné est considérée et non pas la charge présente et future pendant une durée de temps importante (et pas seulement à un moment donné) laquelle durée nécessiterait une complexité et une puissance disponibles bien plus grandes pour être correctement considérée. Aucun ordonnancement des tâches n'est réalisé au niveau dudit logiciel tournant en tâche de fond. Ce logiciel tournant en tâche de fond ne nécessite aucune surcouche logicielle au-dessus de la couche logicielle desdits gestionnaires. Ce logiciel tournant en tâche de fond tourne sur le même noeud de management que les gestionnaires qu'il coordonne.

De préférence, ledit logiciel tournant en tâche de fond est interfacé auxdits gestionnaires de manière à répartir les ressources dudit ensemble entre lesdits gestionnaires notamment en fonction d'une règle prédéfinie de répartition des ressources entre lesdits gestionnaires. Ainsi, une évolution à moyen terme, et non plus seulement à court terme, de la répartition des ressources entre gestionnaires peut être réalisée. Cette répartition des ressources à moyen terme, souvent une reconfiguration de la répartition des ressources, peut être effectuée tout en effectuant simultanément une répartition à court terme des ressources en fonction de la charge respective des gestionnaires. Dans ce cas, la règle prédéfinie, en particulier si elle est particulièrement rigide, peut n'être que partiellement respectée en réalité car un compromis va être trouvé avec la répartition des ressources en fonction de la charge respective des gestionnaires.

De préférence, ladite règle prédéfinie de répartition des ressources entre lesdits gestionnaires prévoit une répartition prédéfinie des ressources qui varie au cours du temps. Tout en étant prédéfinie, cette répartition des ressources n'est pas fixe, elle peut varier au cours du temps, et tendre par exemple à modifier durablement la répartition moyenne des ressources entre les gestionnaires.

De préférence, ladite règle prédéfinie de répartition des ressources entre lesdits gestionnaires prévoit une répartition prédéfinie des ressources qui opère un transfert progressif de l'ensemble des ressources d'un desdits gestionnaires vers un autre desdits gestionnaires, ledit transfert progressif étant de préférence effectué en respectant une vitesse limite prédéterminée de déplacement de ressources d'un desdits gestionnaires vers un autre desdits gestionnaires. De préférence, ledit logiciel tournant en tâche de fond est interfacé auxdits gestionnaires de manière à répartir les ressources dudit ensemble entre lesdits gestionnaires pendant la durée de transition lors du passage d'un gestionnaire à un autre gestionnaire pour ledit ensemble de ressources. Par exemple, à partir d'une répartition 0%/100% au départ entre deux gestionnaires, le système passe à une répartition 25%/75% entre ces deux gestionnaires dans une première période, puis à une répartition 50%/50% entre ces deux gestionnaires dans une deuxième période, puis à une répartition 75%/25% entre ces deux gestionnaires dans une troisième période, et enfin à une répartition 100%/0% entre ces deux gestionnaires dans une quatrième et dernière période : le remplacement d'un gestionnaire par un autre a alors été réalisé. Ainsi, la transition, pour un ensemble de ressources données, d'un premier gestionnaire de ressources et de tâches vers un deuxième gestionnaire de ressources et de tâches, peut être réalisée progressivement et en douceur, tout en maintenant un taux important de disponibilité des ressources, même pendant la phase de transition entre le premier gestionnaire et le deuxième gestionnaire. Lors du remplacement d'un premier gestionnaire par un deuxième gestionnaire, la gestion de l'ensemble de ressources pendant la période de transition, permet de maintenir une disponibilité importante des ressources, et ceci aussi bien au travers du premier que du deuxième gestionnaire. Encore une fois, même lors d'un remplacement complet d'un premier gestionnaire par un deuxième gestionnaire, pour un ensemble de ressources, la transition se fait de manière progressive et continue, sans aucune rupture et sans aucun à-coup.

De préférence, le système comprend seulement deux gestionnaires qui partagent ledit ensemble de ressources. Le logiciel tournant en tâche de fond, malgré sa grande simplicité et son faible besoin en ressources, suffit parfaitement à effectuer l'harmonisation de gestion de ressources entre les gestionnaires qui ne sont alors que deux.

De préférence, au moins deux desdits gestionnaires utilisent des logiciels de fonctionnement différents entre eux, et de préférence chacun desdits gestionnaires utilise un logiciel de fonctionnement différent de ceux des autres gestionnaires, et de préférence, parmi les logiciels de fonctionnement utilisés, il y a « SLURM » (copyright) et/ou « IBM Platform LSF » (copyright) et/ou « Altair PBS Professional » (copyright). Le logiciel tournant en tâche de fond, malgré sa grande simplicité et son faible besoin en ressources, permet une gestion souple de différents logiciels d'utilisation parmi les gestionnaires, ce qui sinon serait source de difficultés importantes, notamment en raison du fait qu'il n'y a pas correspondance exacte entre les fonctionnalités de gestionnaires présentant différentes logiciels d'utilisation et qu'il n'y a pas non plus correspondance simple lorsque cette correspondance existe. L'utilisation du logiciel tournant en tâche de fond permet de contourner de manière simple cette difficulté.

De préférence, ledit logiciel tournant en tâche de fond est interfacé auxdits gestionnaires de manière à répartir les ressources dudit ensemble entre lesdits gestionnaires seulement à certains moments de répartition, de préférence lorsque ledit logiciel tournant en tâche de fond est contacté par l'un desdits gestionnaires dont au moins une partie des ressources se libèrent en raison de la fin d'au moins une tâche correspondante et/ou de préférence régulièrement à des moments prédéterminés avantageusement de manière périodique. D'une part, chaque fin de tâche et chaque libération des ressources occupées correspondantes est le moment idéal pour faire basculer tout ou partie de ces ressources d'un gestionnaire vers l'autre. D'autre part, en cas d'absence de fin de tâche, en raison par exemple de l'absence de tâches en cours gérées par un gestionnaire, les ressources inutilisées de ce gestionnaire peuvent ainsi être plus rapidement réaffectées à un autre gestionnaire lequel peut avoir des tâches en attente, faute de ressources suffisantes qui lui sont affectées.

De préférence, les charges respectives en tâches desdits gestionnaires sont fonctions du nombre de leurs noeuds de calcul occupés par des tâches. Les ressources considérées qui sont à répartir sont alors les noeuds de calcul. Pour modifier la répartition des noeuds de calcul, il est tenu compte pour chaque gestionnaire, de ses noeuds de calcul occupés et de ses noeuds de calcul libres. Plus la proportion de ses noeuds de calcul occupés est faible, et plus grand sera le nombre de ses noeuds de calcul libres qui pourront être réaffectés à un autre gestionnaire.

De préférence, lorsque des ressources dudit ensemble sont affectées soit à plusieurs desdits gestionnaires simultanément soit à aucun desdits gestionnaires à un moment où elles devraient l'être, ledit logiciel tournant en tâche de fond, d'abord affecte lesdites ressources à l'un desdits gestionnaires et à lui seulement, et ensuite envoie une alerte à un administrateur dudit système. Une ressource affectée simultanément à deux gestionnaires va tendre à désorganiser le système en le rendant plus lent et moins efficace. Une ressource affectée à aucun gestionnaire, sans être en panne ou en maintenance, est une ressource inutilement inexploitée, révélatrice d'une diminution d'efficacité du système. Ces deux cas vont correspondre le plus souvent à des dysfonctionnements non voulus. C'est pourquoi, d'abord le logiciel tournant en tâche de fond les corrige, pour rétablir une efficacité optimisée du système, et ensuite envoie une alerte pour que l'administrateur du système puisse intervenir à son niveau s'il le juge nécessaire.

De préférence, l'un des paramètres de répartition pendant une période donnée est un moment dans la période. Ce peut être par exemple la tranche horaire de la journée et de la nuit, ou bien le week-end par rapport à la semaine. Ainsi, de manière dérogatoire à une répartition relativement équilibrée des ressources entre gestionnaires, pendant certaines tranches horaires spécifiques, comme par exemple au milieu de la nuit, toutes les ressources sont affectées à un seul gestionnaire pour permettre le traitement d'une ou de plusieurs grandes tâches nécessitant l'utilisation simultanée de toutes ou de presque toutes les ressources de l'ensemble de ressources.

De préférence, la répartition des ressources entre lesdits gestionnaires est effectuée en fonction de leurs charges respectives en tâches et/ou en fonction d'une règle prédéfinie de répartition des ressources entre lesdits gestionnaires.

De préférence, l'invention concerne aussi un produit programme d'ordinateur, comprenant des instructions de code de programme enregistrés sur un support lisible par un ordinateur, comprenant des moyens de programmation lisibles par ordinateur pour tourner en tâche de fond, des moyens de programmation lisibles par ordinateur pour être interfacé ou pour pouvoir être interfacé à des gestionnaires (1, 2) de ressources et de tâches, indépendants entre eux, de manière à pouvoir répartir des ressources (4) d'un ensemble (3) de ressources (4) commun auxdits gestionnaires (1, 2), entre lesdits gestionnaires (1, 2), en fonction d'un ou de plusieurs paramètres de répartition, lorsque ledit programme fonctionne sur un ordinateur.

De préférence, ce produit programme d'ordinateur comprend des moyens de programmation lisibles par ordinateur pour que la répartition des ressources (4) entre lesdits gestionnaires (1, 2) soit effectuée en fonction de leurs charges respectives en tâches et/ou en fonction d'une règle prédéfinie de répartition des ressources (4) entre lesdits gestionnaires (1, 2), lorsque ledit programme fonctionne sur un ordinateur.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un exemple des principaux éléments de l'architecture d'un système qui utiliserait un super gestionnaire de gestionnaires.
La figure 2 représente schématiquement un exemple des principaux éléments de l'architecture d'un système selon un mode de réalisation de l'invention.
La figure 3 représente schématiquement un exemple détaillant une partie de l'architecture d'un système selon un mode de réalisation de l'invention.
La figure 4 représente schématiquement un exemple détaillant une partie de l'architecture d'un système selon un mode de réalisation de l'invention, explicitant l'environnement du logiciel tournant en tâche de fond.
La figure 5 représente schématiquement un exemple de procédé déroulé par un système selon un mode de réalisation de l'invention.

### DESCRIPTION DETAILLEE DE L'INVENTION

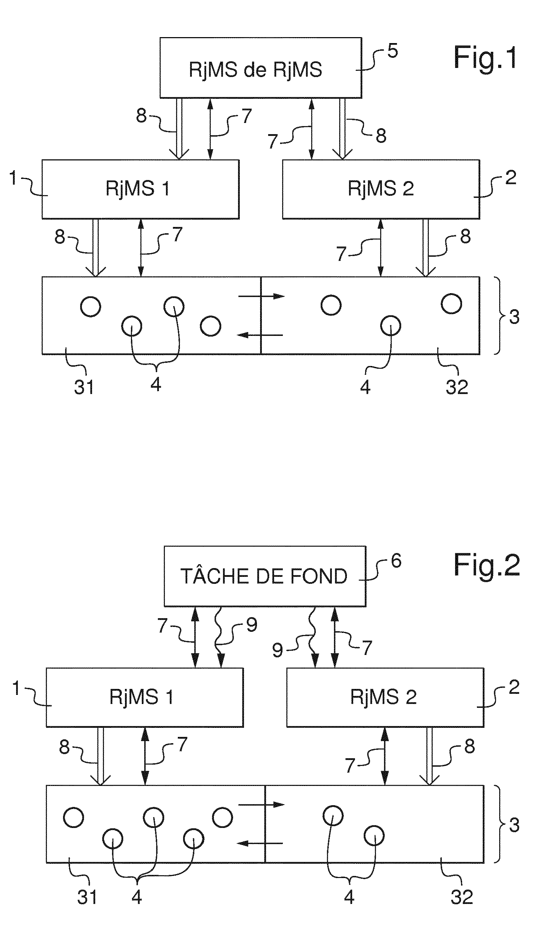

La figure 1 représente schématiquement un exemple des principaux éléments de l'architecture d'un système qui utiliserait un super gestionnaire de gestionnaires et la figure 2 représente schématiquement un exemple des principaux éléments de l'architecture d'un système selon un mode de réalisation de l'invention. Les parties communes aux deux figures 1 et 2 vont maintenant être décrites. Une tâche peut encore être appelée un job.

Un premier gestionnaire 1 et un deuxième gestionnaire 2 se partagent les noeuds de calcul 4 d'un ensemble 3 commun de noeuds de calcul 4. A un instant donné, sauf cas particulier, les noeuds 4 sont soit affectés au premier gestionnaire 1, auquel cas ils sont dans le groupe 31 de noeuds, soit affectés au deuxième gestionnaire 2, auquel cas ils sont dans le groupe 32 de noeuds. Au cours du temps, cette affectation peut changer. Les noeuds 4 peuvent passer, lorsqu'ils sont libres, d'un groupe à l'autre et vice-versa.

Chaque gestionnaire échange des informations avec les noeuds de son groupe, ce qui est représenté par la flèche 7 bidirectionnelle d'échange d'informations. Chaque gestionnaire gère les noeuds 4 de son groupe en ordonnançant les tâches par rapport à ces noeuds 4, ce qui est représenté par la flèche 8 monodirectionnelle d'ordonnancement.

En plus de proposer les options et paramètres qui leur sont propres, les gestionnaires 1 et 2 permettent de lancer des scripts standards définis par les administrateurs de la machine, avant et après chaque tâche. Ce script a connaissance de certains paramètres des tâches sous forme de variables d'environnement. Parmi ces paramètres, se trouve la liste des noeuds 4 utilisés pour la tâche terminée. Il est donc possible d'ajouter, dans le script qui suit les tâches, une commande permettant d'appeler l'outil et d'avoir, comme paramètre de cette commande, la liste des noeuds 4. Cette commande donne la liste des noeuds 4 à partir de laquelle il peut être ainsi décidé de changer un, plusieurs, tous ou aucun de ces noeuds 4 de gestionnaire en fonction du nombre de noeuds 4 dans chacun des gestionnaires 1 et 2 et de leurs charges respectives. Pour passer un noeud 4 d'un gestionnaire à un autre, il est fait appel aux commandes de chaque gestionnaire permettant de changer l'état des noeuds 4. Sur le gestionnaire « de départ », par exemple le premier gestionnaire 1, ce noeud 4 est placé en « indisponible », tandis que sur le gestionnaire « d'arrivée », par exemple le deuxième gestionnaire 2, ce noeud 4 est placé en « disponible ». Cette liste de noeuds 4 est fournie lors de l'échange 7 d'information entre d'une part les gestionnaires 1 et 2 et d'autre part soit le super gestionnaire 5 pour la figure 1, soit le dispositif tournant en tâche de fond 6 pour la figure 2. Pour un gestionnaire donné, les noeuds 4 sont « indisponibles » ou lorsqu'ils sont disponibles, ils peuvent être « libres » (oisifs) ou « occupés » (en train d'effectuer une tâche ou un calcul).

La figure 1 représente schématiquement un exemple des principaux éléments de l'architecture d'un système qui utiliserait un super gestionnaire de gestionnaires. Les parties spécifiques à la figure 1 vont maintenant être décrites. Un super gestionnaire 5 gère les gestionnaires 1 et 2 en échangeant des informations avec eux et en ordonnançant les tâches pour eux. Ce système serait complexe et nécessiterait un niveau important de ressources. Par ailleurs, l'imbrication de l'ordonnancement effectué par le super gestionnaire avec les ordonnancements effectués par les gestionnaires peut se révéler délicate à mettre en place ou à gérer, en particulier en ce qui concerne les risques de conflit de décision entre gestionnaires et super gestionnaire.

La figure 2 représente schématiquement un exemple des principaux éléments de l'architecture d'un système selon un mode de réalisation de l'invention. Les parties spécifiques à la figure 2 vont maintenant être décrites. Un dispositif ou logiciel tournant en tâche de fond 6 échange des informations avec les gestionnaires 1 et 2 et les instruit des noeuds 4 à échanger entre eux, mais il ne les gère pas, il n'ordonnance pas les tâches en fonction des gestionnaires 1 et 2. Ce système est simple et ne nécessite qu'un niveau limité de ressources. Cette simple réaffectation des noeuds 4 entre les gestionnaires 1 et 2 est représentée par la flèche unidirectionnelle de réaffectation 9.

Il est intéressant que le dispositif tournant en tâche de fond 6 vérifie régulièrement l'état des noeuds 4 pour être sûr que les deux gestionnaires 1 et 2 n'utilisent pas des mêmes noeuds simultanément et pour s'assurer qu'aucun noeud n'est placé en « indisponible » sur les deux gestionnaires 1 et 2 simultanément, sauf bien sûr cas particulier, comme la manipulation de l'administrateur pour effectuer une maintenance, ou comme le cas d'une panne.

Les paramètres de répartition entre les gestionnaires peuvent être de plusieurs types, selon une règle prédéfinie de répartition et/ou selon leurs charges respectives en tâches.

Lorsque le paramètre de répartition est une règle prédéfinie de répartition, celle-ci peut être de plusieurs types. Par exemple, dans le cas où un nouveau gestionnaire est mis en place, celui-ci commence avec 0 noeud et est prévu pour utiliser, après un laps de temps défini un certain pourcentage des noeuds de l'ensemble de noeuds communs. Ou bien par exemple, le cas où chaque gestionnaire est prévu pour utiliser 50% des noeuds en permanence et ceci, malgré les noeuds qui s'arrêtent (par exemple pour cause de panne) ou qui sont mis en maintenance par l'administrateur. Ou bien par exemple, le cas où un nombre minimal de noeuds pour chaque gestionnaire doit être conservé, malgré les pannes et les maintenances.

Lorsque le paramètre de répartition est fonction des charges respectives en tâches des gestionnaires, celui-ci peut être de plusieurs types. Par exemple, avoir une répartition proportionnelle au nombre de noeuds demandés. Ou bien par exemple, forcer une utilisation autour de 50% pour chaque gestionnaire de 8h à 18h, un créneau de 20h à 00h et un autre de 2h à 6h avec une répartition 0%/100% et les créneaux intermédiaires permettant un passage en douceur des tâches.

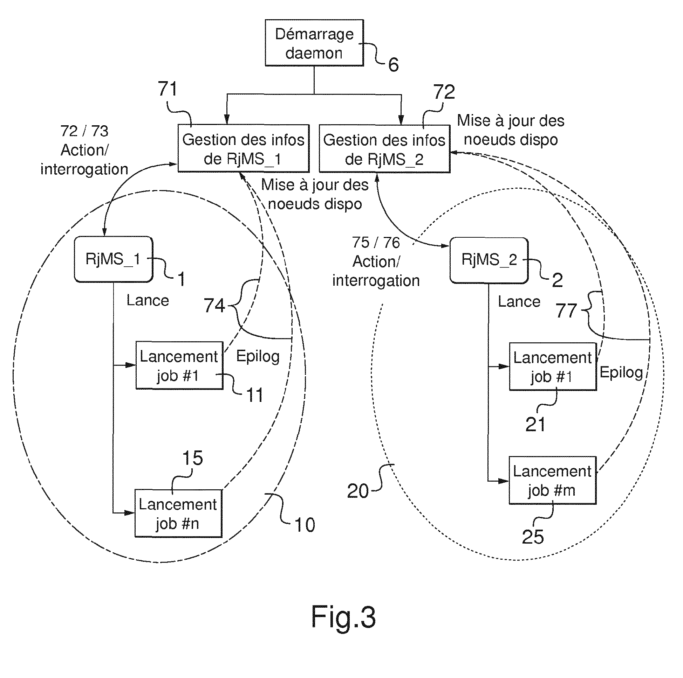

La figure 3 représente schématiquement un exemple détaillant une partie de l'architecture d'un système selon un mode de réalisation de l'invention. Le dispositif tournant en tâche de fond 6 est chargé de répartir les noeuds de calcul disponibles entre les gestionnaires 1 et 2. Le gestionnaire 1 a un ensemble 10 de tâches 11 à 15 à lancer. A chaque fin de tâche 11 à 15, un message 74 correspondant à une fin de tâche est envoyé au module 71 de gestion des informations du gestionnaire 1. Le gestionnaire 1 envoie également des informations en réponse à l'interrogation 73 provenant du dispositif tournant en tâche de fond 6 par l'intermédiaire du module 71 de gestion des informations du gestionnaire 1. Toujours par l'intermédiaire du module 71 de gestion des informations du gestionnaire 1, le dispositif tournant en tâche de fond 6 indique, par une action 72, au gestionnaire 1 quels noeuds lui sont affectés et quels noeuds lui sont retirés.

Le gestionnaire 2 a un ensemble 20 de tâches 21 à 25 à lancer. A chaque fin de tâche 21 à 25, un message 77 correspondant à une fin de tâche est envoyé au module 72 de gestion des informations du gestionnaire 2. Le gestionnaire 2 envoie également des informations en réponse à l'interrogation 76 provenant du dispositif tournant en tâche de fond 6 par l'intermédiaire du module 72 de gestion des informations du gestionnaire 2. Toujours par l'intermédiaire du module 72 de gestion des informations du gestionnaire 2, le dispositif tournant en tâche de fond 6 indique, par une action 75, au gestionnaire 2 quels noeuds lui sont affectés et quels noeuds lui sont retirés.

L'outil comprend un dispositif ou un logiciel tournant en tâche de fond 6 (daemon en langue anglaise) tournant sur le même noeud de management que les gestionnaires 1 et 2. Ce dispositif tournant en tâche de fond 6 va savoir quels gestionnaires sont utilisés et connaître pour chacun d'entre eux certaines commandes. Ces commandes sont par exemple interroger les gestionnaires pour connaître l'état des noeuds, ou bien par exemple interroger les gestionnaires pour connaître les caractéristiques des tâches lancées et encore en attente, le nombre de noeuds requis pour chaque tâche et le temps demandé pour effectuer chaque tâche, ou bien par exemple changer l'état d'un noeud d'un état « libre » vers un état « indisponible » et inversement.

Le dispositif tournant en tâche de fond 6 va avoir deux ensembles de commandes externes. Le premier ensemble de commandes externes va permettre à l'administrateur de gérer le nombre de noeuds alloué à chacun des gestionnaires. Le second ensemble de commandes externes comprend des commandes appelées à la fin de chaque tâche de chacun des gestionnaires pour définir si les noeuds de cette tâche doivent être déplacés vers l'autre gestionnaire ou non.

Le dispositif tournant en tâche de fond 6 va avoir des commandes de configuration qui vont lui permettre de définir des objectifs et des contraintes sur l'allocation des noeuds aux gestionnaires 1 et 2. Ces objectifs et contraintes peuvent être par exemple un nombre de noeuds minimum pour chacun des gestionnaires ainsi qu'un nombre maximum, ou bien par exemple le fait que certains noeuds ne peuvent être déplacer d'un gestionnaire à l'autre, ou encore imposer une vitesse de déplacement maximale, par exemple une limite du nombre de noeuds déplacés à la minute, d'un gestionnaire vers l'autre.

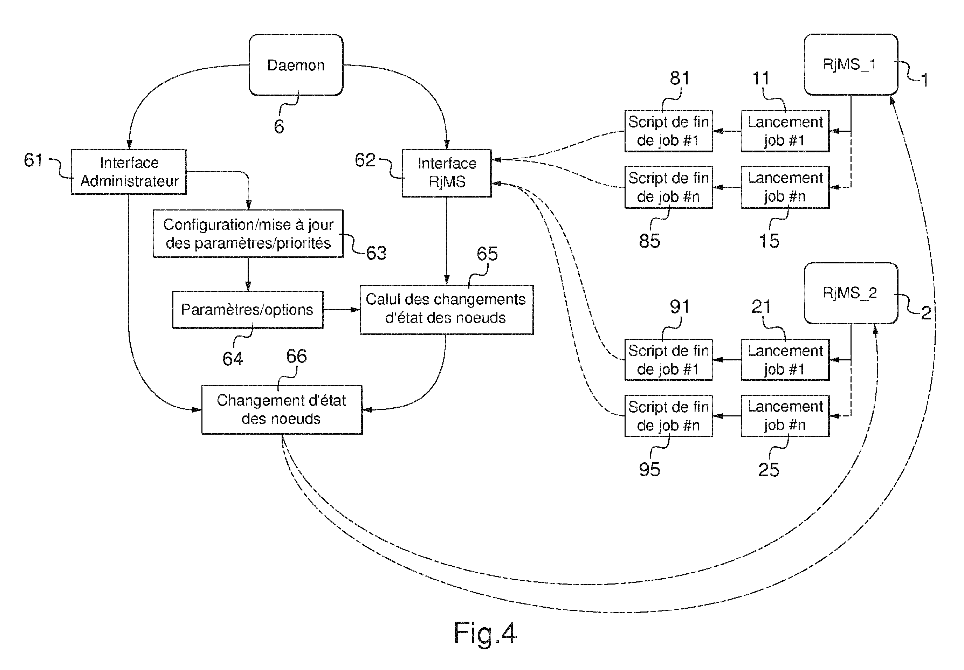

La figure 4 représente schématiquement un exemple détaillant une partie de l'architecture d'un système selon un mode de réalisation de l'invention, explicitant l'environnement du logiciel tournant en tâche de fond. Le gestionnaire 1 a un ensemble de tâches 11 à 15 à effectuer. A chaque fin de tâche 11 à 15, un script de fin de tâche 81 à 85 est envoyé à une interface gestionnaire 62 du dispositif tournant en tâche de fond 6. De même, le gestionnaire 2 a un ensemble de tâches 21 à 25 à effectuer. A chaque fin de tâche 21 à 25, un script de fin de tâche 91 à 95 est envoyé à l'interface gestionnaire 62 du dispositif tournant en tâche de fond 6.

Le dispositif tournant en tâche de fond 6 est relié aussi bien à son interface gestionnaire 62 qu'à une interface administrateur 61. L'interface administrateur 61 effectue en 63 une configuration ou une mise à jour aussi bien des paramètres que des priorités, ce qui donne un groupe 64 de paramètres et d'options lesquels sont utilisés, en liaison avec les informations provenant de l'interface gestionnaire 62, pour effectuer en 65 le calcul des noeuds devant changer d'état, ce qui débouche sur la liste 66 des changements d'état des noeuds, supervisée par l'administrateur au travers de l'interface administrateur 61, liste 66 qui est communiquée aussi bien au gestionnaire 1 qu'au gestionnaire 2.

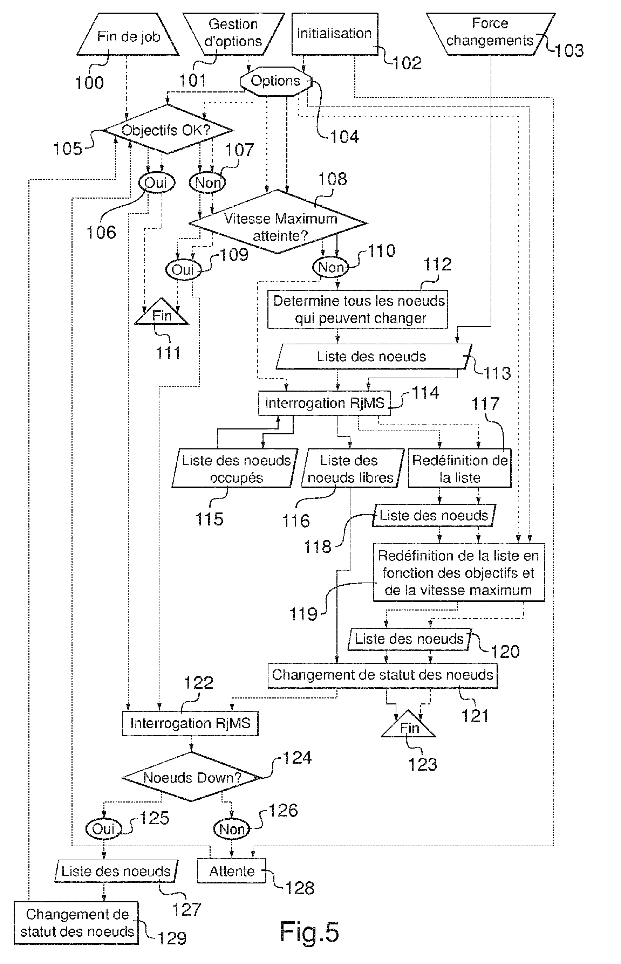

La figure 5 représente schématiquement un exemple de procédé déroulé par un système selon un mode de réalisation de l'invention. Les trapèzes représentent normalement un appel système, les trapèzes inversés représentent normalement une intervention de l'administrateur, les rectangles représentent normalement une action, les losanges représentent normalement une alternative, les ellipses représentent normalement les branches d'une alternative, les parallélogrammes représentent normalement des entrées/sorties, les triangles des fins de déroulement de procédé.

A l'initialisation 102, le logiciel tournant en tâche de fond est lancé, il tournera en permanence et ne sera arrêté que par une intervention de l'administrateur. Puis vient une phase d'attente 128. Ensuite, un contrôle 105 de la réalisation des objectifs est effectué.

En cas de contrôle positif 106, une interrogation gestionnaire 122 est effectuée. Une vérification 124 des noeuds en panne est effectuée. En l'absence 126 de noeuds en panne, on revient à la phase d'attente 128 et la boucle continue. En présence 125 de noeuds en panne, un listage 127 de ces noeuds en panne est effectué, un changement 129 de statut des noeuds en panne est réalisé, et on revient à un contrôle 105 de la réalisation des objectifs et la boucle continue.

En cas de contrôle négatif 107, la vérification 108 de l'atteinte ou non de la vitesse maximale de transfert de noeuds d'un gestionnaire à l'autre est effectuée. En cas d'atteinte 109 de cette vitesse maximale, on revient à l'interrogation gestionnaire 122 et la boucle continue. En cas de non atteinte 110 de cette vitesse maximale, une détermination 112 de tous les noeuds qui peuvent changer de gestionnaire est effectuée, ce qui amène l'établissement 113 de la liste de noeuds qui peuvent changer, ce qui aboutit à une nouvelle interrogation gestionnaire 114, amenant à son tour une redéfinition 117 de liste, aboutissant à un nouvel établissement 118 de la liste de noeuds qui peuvent changer, amenant une nouvelle redéfinition 119 de cette liste mais cette fois en fonction des objectifs et de la vitesse maximale de transfert, aboutissant à un établissement supplémentaire 120 de la liste de noeuds qui peuvent changer, suivi d'un changement 121 de statut des noeuds, et on revient à l'interrogation gestionnaire 122 et la boucle continue.

A chaque fin de tâche 100, un contrôle 105 de la réalisation des objectifs est effectué. En cas de contrôle positif 106, c'est la fin 111 du déroulement du procédé. En cas de contrôle négatif 107, la vérification 108 de l'atteinte ou non de la vitesse maximale de transfert de noeuds d'un gestionnaire à l'autre est effectuée.

En cas d'atteinte 109 de cette vitesse maximale, c'est la fin 111 du déroulement du procédé. En cas de non atteinte 110 de cette vitesse maximale, on aboutit à une nouvelle interrogation gestionnaire 114, amenant à son tour une redéfinition 117 de liste, aboutissant à un nouvel établissement 118 de la liste de noeuds qui peuvent changer, amenant une nouvelle redéfinition 119 de cette liste mais cette fois en fonction des objectifs et de la vitesse maximale de transfert, aboutissant à un établissement supplémentaire 120 de la liste de noeuds qui peuvent changer, suivi d'un changement 121 de statut des noeuds, et c'est la fin 123 du déroulement du procédé.

Lors d'un changement forcé 103, par intervention de l'administrateur, est amené l'établissement 113 de la liste de noeuds qui peuvent changer, ce qui aboutit à une nouvelle interrogation gestionnaire 114, amenant un établissement 115 d'une liste de noeuds occupés, suivi d'une nouvelle interrogation gestionnaire 114, puis de l'établissement 116 d'une liste de noeuds libres, suivi d'un changement 121 de statut des noeuds, et c'est la fin 123 du déroulement du procédé.

Lors de l'initialisation 102, une modification 104 des options peut également être réalisée, laquelle sera utilisée par la nouvelle redéfinition 119 de liste, par la vérification 108 de l'atteinte ou non de la vitesse maximale, par le contrôle 105 de la réalisation des objectifs.

Une gestion d'options 101 peut également être réalisée par l'intervention de l'administrateur, suivie d'une modification 104 des options, laquelle sera utilisée par la nouvelle redéfinition 119 de liste, par la vérification 108 de l'atteinte ou non de la vitesse maximale, par le contrôle 105 de la réalisation des objectifs.

Bien entendu, la présente invention n'est pas limitée aux exemples et au mode de réalisation décrits et représentés, mais elle est susceptible de nombreuses variantes accessibles à l'homme de l'art.

## Revendications

1. Système comprenant :
- au moins deux gestionnaires (1, 2) de ressources et de tâches, indépendants entre eux;
- un ensemble (3) de ressources (4) commun auxdits gestionnaires (1, 2) ;
- un logiciel (6) tournant en tâche de fond interfacé auxdits gestionnaires (1, 2) de manière à répartir les ressources (4) dudit ensemble (3) entre lesdits gestionnaires (1, 2) en fonction d'un ou de plusieurs paramètres de répartition.

2. Système selon la revendication 1, **caractérisé en ce que** ledit logiciel (6) tournant en tâche de fond est interfacé auxdits gestionnaires (1, 2) de manière à répartir les ressources (4) dudit ensemble (3) entre lesdits gestionnaires (1, 2) notamment en fonction de leurs charges respectives en tâches.

3. Système selon la revendication 2, **caractérisé en ce que** ledit logiciel (6) tournant en tâche de fond est interfacé auxdits gestionnaires (1, 2) de manière à répartir les ressources (4) dudit ensemble (3) entre lesdits gestionnaires (1, 2) notamment en fonction de leurs charges respectives en tâches occupant les ressources (4) dudit ensemble (3) à un instant donné, sans considération de leur durée d'occupation restante et sans considération de leurs charges respectives en tâches futures.

4. Système selon l'une quelconque des revendications précédentes, **caractérisé en ce que** ledit logiciel (6) tournant en tâche de fond est interfacé auxdits gestionnaires (1, 2) de manière à répartir les ressources (4) dudit ensemble (3) entre lesdits gestionnaires (1, 2) notamment en fonction d'une règle prédéfinie de répartition des ressources entre lesdits gestionnaires (1, 2).

5. Système selon la revendication 4, **caractérisé en ce que** ladite règle prédéfinie de répartition des ressources (4) entre lesdits gestionnaires (1, 2) prévoit une répartition prédéfinie des ressources (4) qui varie au cours du temps.

6. Système selon la revendication 5, **caractérisé en ce que** ladite règle prédéfinie de répartition des ressources (4) entre lesdits gestionnaires (1, 2) prévoit une répartition prédéfinie des ressources (4) qui opère un transfert progressif de l'ensemble des ressources (4) d'un desdits gestionnaires (1, 2) vers un autre desdits gestionnaires (1, 2), ledit transfert progressif étant de préférence effectué en respectant une vitesse limite prédéterminée de déplacement de ressources (4) d'un desdits gestionnaires (1, 2) vers un autre desdits gestionnaires (1, 2).

7. Système selon la revendication 6, **caractérisé en ce que** ledit logiciel (6) tournant en tâche de fond est interfacé auxdits gestionnaires (1, 2) de manière à répartir les ressources (4) dudit ensemble (3) entre lesdits gestionnaires (1, 2) pendant la durée de transition lors du passage d'un gestionnaire (1) à un autre gestionnaire (2) pour ledit ensemble (3) de ressources (4).

8. Système selon l'une quelconque des revendications précédentes, **caractérisé en ce que** le système comprend seulement deux gestionnaires (1, 2) qui partagent ledit ensemble (3) de ressources (4).

9. Système selon l'une quelconque des revendications précédentes, **caractérisé en ce qu'**au moins deux desdits gestionnaires (1, 2) utilisent des logiciels de fonctionnement différents entre eux, et **en ce que** de préférence chacun desdits gestionnaires (1, 2) utilise un logiciel de fonctionnement différent de ceux des autres gestionnaires (1, 2).

10. Système selon l'une quelconque des revendications précédentes, **caractérisé en ce que** ledit logiciel (6) tournant en tâche de fond est interfacé auxdits gestionnaires (1, 2) de manière à répartir les ressources (4) dudit ensemble (3) entre lesdits gestionnaires (1, 2) seulement à certains moments de répartition, de préférence lorsque ledit logiciel (6) tournant en tâche de fond est contacté par l'un desdits gestionnaires (1, 2) dont au moins une partie des ressources (4) se libèrent en raison de la fin d'au moins une tâche correspondante et/ou de préférence régulièrement à des moments prédéterminés avantageusement de manière périodique.

11. Système selon l'une quelconque des revendications précédentes, **caractérisé en ce que** les charges respectives en tâches desdits gestionnaires (1, 2) sont fonctions du nombre de leurs noeuds de calcul (4) occupés par des tâches.

12. Système selon l'une quelconque des revendications précédentes, **caractérisé en ce que**, lorsque des ressources (4) dudit ensemble (3) sont affectées soit à plusieurs desdits gestionnaires (1, 2) simultanément soit à aucun desdits gestionnaires (1, 2) à un moment où elles devraient l'être, ledit logiciel (6) tournant en tâche de fond, d'abord affecte lesdites ressources (4) à l'un desdits gestionnaires (1, 2) et à lui seulement, et ensuite envoie une alerte à un administrateur dudit système.

13. Système selon l'une quelconque des revendications précédentes, **caractérisé en ce que** l'un des paramètres de répartition pendant une période donnée est un moment dans la période.

14. Produit programme d'ordinateur, comprenant des instructions de code de programme enregistrés sur un support lisible par un ordinateur, comprenant :
- des moyens de programmation lisibles par ordinateur pour tourner en tâche de fond,
- des moyens de programmation lisibles par ordinateur pour être interfacé ou pour pouvoir être interfacé à des gestionnaires (1, 2) de ressources et de tâches, indépendants entre eux, de manière à pouvoir répartir des ressources (4) d'un ensemble (3) de ressources (4) commun auxdits gestionnaires (1, 2), entre lesdits gestionnaires (1, 2), en fonction d'un ou de plusieurs paramètres de répartition,
lorsque ledit programme fonctionne sur un ordinateur.

15. Produit programme d'ordinateur selon la revendication 14, **caractérisé en ce qu'**il comprend des moyens de programmation lisibles par ordinateur pour que la répartition des ressources (4) entre lesdits gestionnaires (1, 2) soit effectuée en fonction de leurs charges respectives en tâches et/ou en fonction d'une règle prédéfinie de répartition des ressources (4) entre lesdits gestionnaires (1, 2), lorsque ledit programme fonctionne sur un ordinateur.
